⑲ 🅔 Europäisches Patentamt

European Patent Office

Office européen des brevets

(11) Numéro de publication : **0 354 082 B1**

(12) **FASCICULE DE BREVET EUROPEEN**

(45) Date de publication du fascicule du brevet :
**09.09.92 Bulletin 92/37**

(21) Numéro de dépôt : **89402026.2**

(22) Date de dépôt : **17.07.89**

(51) Int. Cl.⁵ : **B60J 10/04**

(54) Coulisse de guidage de glace mobile, notamment de glace ou vitre d'automobile.

(30) Priorité : **28.07.88 FR 8810192**

(43) Date de publication de la demande :
**07.02.90 Bulletin 90/06**

(45) Mention de la délivrance du brevet :
**09.09.92 Bulletin 92/37**

(84) Etats contractants désignés :
**BE DE ES GB IT LU NL SE**

(56) Documents cités :
**EP-A- 0 127 591**
**EP-A- 0 200 618**
**FR-A- 2 307 450**
**FR-A- 2 551 129**
**JP-A- 2 420 386**

(73) Titulaire : **HUTCHINSON**
**2 rue Balzac**
**F-75008 Paris (FR)**

(72) Inventeur : **Guillon, Henri**
**66, Avenue de Paris**
**F-78740 Vaux-sur-Seine (FR)**

(74) Mandataire : **Orès, Bernard et al**
**Cabinet ORES 6, Avenue de Messine**
**F-75008 Paris (FR)**

EP 0 354 082 B1

Jouve, 18, rue Saint-Denis, 75001 PARIS

**Description**

La présente invention est relative à un dispositif de guidage pour des surfaces qui peuvent être animées d'un mouvement telles que, notamment, des glaces ou vitres d'automobiles, des surfaces métalliques et analogues comportant un profilé ou coulisse de guidage, en matériau élastique, comme par exemple du caoutchouc ou une matière plastique.

Ces coulisses de guidage sont destinées non seulement à remplir la fonction de guidage découlant de leur définition, mais également à assurer l'étanchéité des surfaces mobiles vis-à-vis des agents extérieurs, notamment de la pluie mais aussi vis-à-vis du bruit et à empêcher l'introduction de toute lame, crochet, fil métallique ou autre moyen d'effraction si ténû soit-il. Ces éléments de construction sont couramment utilisés et remplissent une fonction importante, notamment dans les véhicules automobiles.

Un grand nombre de coulisses de guidage pour vitres d'automobiles a été proposé conformément à l'art antérieur pour résoudre le double problème posé par la nécessité d'assurer l'étanchéité précitée de la surface mobile, à sa jonction avec un châssis fixe dans lequel elle est montée, sans cependant gêner le coulissement de la surface mobile pendant son mouvement par rapport au châssis fixe.

Les solutions proposées à ces deux problèmes ont abouti à la mise sur le marché de joints d'étanchéité comprenant essentiellement deux lèvres d'étanchéité portées par un profilé sensiblement en forme de U, les deux lèvres s'appliquant contre les faces respectives de la glace et étant revêtues sur la partie de leur surface en contact avec la glace d'un revêtement facilitant le glissement de celle-ci, un revêtement de nature analogue étant de préférence également disposé sur la surface du fond de la coulisse susceptible d'entrer en contact avec le bord de la surface mobile, une glace ou vitre d'automobile dans ce qui suit pour faciliter et simplifier la lecture de l'exposé, cette indication étant donnée à titre d'exemple non limitatif.

L'allègement des véhicules, de nouvelles formes esthétiques et aérodynamiques, ainsi que la simplification du mécanisme d'entraînement des vitres ont conduit à l'adoption d'un système de manoeuvre de la glace qui ne soutient celle-ci qu'en un point, si bien qu'il est devenu nécessaire de prévoir des moyens de retenue afin d'empêcher toute rotation de celle-ci au cours de sa manoeuvre ; à cet effet on a envisagé de fixer sur un des angles supérieurs de celle-ci, généralement l'angle supérieur arrière, un patin profilé, par exemple en Γ ou en T, et de faire coopérer celui-ci suivant le cas avec une ou deux nervures prévues sur la coulisse et ménageant des gorges de guidage du patin.

Les solutions connues de ce type ne sont pas entièrement satisfaisantes soit qu'elles proposent une coulisse de forme très simple dans laquelle les lèvres d'étanchéité elles-mêmes sont profilées de manière à former sur la partie arrière un décrochement formant gouttière de guidage pour le patin (JP-A-24 203/86), soit qu'au contraire, elles proposent une coulisse comportant des saillies distinctes des lèvres (FR-A-2 551 129). Dans le premier cas, l'avantage de la simplicité de construction de la coulisse présente deux contreparties prohibitives : d'une part la nécessité d'un patin de forme profilée complexe, comportant un rétrécissement et nécessitant une découpe de la glace, d'autre part, une détérioration de la fonction d'étanchéité des lèvres sous l'effet des contraintes de torsion imposées par le patin. On retrouve, quelque peu atténué, ce second inconvénient dans le second cas du fait que les saillies sont portées comme les lèvres par les flancs de la coulisse.

L'invention a pour but de fournir une coulisse de guidage exempte des inconvénients précités dont les lèvres soient totalement protégées,' par construction même, contre tout effort exercé par le patin sur la coulisse, et permettant un montage simple de la glace dans la coulisse préalablement ou non à sa mise en place sur le véhicule.

Dans une coulisse suivant l'invention, et contrairement aux coulisses connues, la ou les gorge(s) de guidage du patin au lieu d'être réalisée(s) à proximité immédiate des lèvres et/ou d'être formée(s) par des saillies des flancs du profilé en U auxquels sont reliées les lèvres, sont définie(s) par une ou deux nervure(s) en saillie sur la base du corps de joint constituant la coulisse.

Une coulisse de guidage de glace mobile suivant l'invention, notamment de glace ou vitre d'automobile assurant l'étanchéité et le guidage d'une glace ou vitre munie d'un patin comportant au moins une partie en saillie proéminente perpendiculairement au plan moyen de la vitre, destinée à être montée dans un châssis sensiblement en forme de U, ladite coulisse comportant une base et deux flancs sensiblement parallèles entre eux et perpendiculaires à ladite base dans la condition de montage, ainsi que deux lèvres d'étanchéité raccordées respectivement aux deux extrémités desdits flancs opposées à ladite base, est caractérisée en ce qu'elle comporte au moins une nervure ménagée à l'extrémité d'un montant érigé sur la base, ce montant étant sensiblement parallèle aux flancs dans la condition de montage de la coulisse, cette nervure présentant un épaulement dirigé vers l'intérieur et vers la base de la coulisse de manière à ménager avec ladite base une gorge pour le guidage du patin.

Suivant un mode de réalisation de l'invention, la base et les flancs de la coulisse sont constitués de matériaux identiques ou différents, de duretés égales ou différentes, de préférence de matériaux ayant une dureté Shore D de l'ordre de 50, par exemple des matériaux thermoplastiques, TPE, ou des élastomères tandis que les lèvres d'étanchéité et les saillies de maintien sont réalisées dans des matériaux identiques ou différents dont la dureté est comprise entre 25 et 75 Shore A, par exemple des matériaux cellulaires compacts ou des élastomères.

Suivant un autre mode de réalisation de l'invention, combinée avec la précédente, les flancs de la coulisse sont raccordés à sa base par des parties en matériau moins dur et plus déformable que la base et les flancs, avantageusement d'une seule pièce avec les saillies de maintien de la coulisse dans le châssis avec lequel elle est destinée à coopérer.

Les parties de la coulisse venant en contact avec la glace et le patin sont avantageusement pourvues d'un revêtement facilitant le glissement de type à fibres ou à poils, réalisé par flocage, ou réalisé en matière plastique a faible coefficient de frottement, comme par exemple une polyoléfine ou du polytétrafluoroéthylène. Un tel revêtement facilitant le glissement réduit considérablement les forces de frottement lors du mouvement des vitres. Les revêtements des lèvres d'étanchéité et de la ou des nervure(s) sont adaptés au coulissage de la glace et de son patin de guidage respectivement.

Suivant un mode de mise en oeuvre de l'invention, particulièrement avantageux, ce revêtement glissant est réalisé par coextrusion d'une polyoléfine ou de polytétrafluoroéthylène avec le ou les matériau(x), de préférence un ou des élastomère(s) ou plastomère(s) constituant les différentes parties de la coulisse sur laquelle il est placé.

Dans un mode préféré de mise en oeuvre de l'invention, la ou les saillie(s) sont raccordée(s) à la base par un ou des montant(s) dirigé(s) sensiblement parallèlement aux flancs dans la condition montée de la coulisse. Avantageusement, ces montants sont raccordés à la base de la coulisse par des congés.

Dans un premier mode de réalisation prévu pour le guidage d'une glace munie d'un patin en T, la coulisse comporte deux nervures de guidage, symétriques, et le revêtement facilitant le glissement est interrompu aux raccords entre les saillies et lesdits montants et entre lesdits montants et la base pour faciliter le montage du patin dans les gorges limitées par les saillies.

Dans un autre mode de réalisation, prévu pour le guidage d'une vitre munie d'un patin en Γ, la coulisse comporte une seule nervure de guidage du patin et un revêtement facilitant le glissement est placé également sur une partie de la surface interne du flanc relié à l'extrémité de la base la plus éloignée de la nervure, ce revêtement ainsi que celui de la nervure étant interrompu aux raccordements avec la base pour faciliter le montage de la glace avec son patin. Eventuellement, le revêtement du flanc est interrompu, de préférence sensiblement en son milieu. Le revêtement de la base peut également être interrompu sensiblement en son milieu pour faciliter la mise en place du patin.

Suivant un autre mode de mise en oeuvre de l'invention, et lorsque la coulisse est destinée à être montée sur un châssis comportant au moins un profil d'accrochage recourbé, la partie profilée en U de la coulisse comporte une patte souple, profilée de manière à épouser le profil d'accrochage, à laquelle est raccordée l'une des lèvres d'étanchéité de la coulisse.

Avantageusement, ladite patte est réalisée dans le même matériau que les lèvres d'étanchéité.

Ces dernières sont généralement constituées d'un matériau élastique de dureté inférieure à celle des flancs et de la base de la coulisse et éventuellement égale à celle de ladite partie recourbée de la partie en U et/ou à celle des saillies ou nervures de maintien de la coulisse sur le châssis de la vitre.

L'invention sera bien comprise et d'autres caractéristiques apparaîtront à la lecture de la description qui suit faite en référence au dessin annexé dans lequel :
— la figure 1 est une vue partielle d'une automobile, montrant un exemple d'application du dispositif de l'invention ;
— la figure 2 montre, en coupe transversale, une coulisse suivant un premier mode de mise en oeuvre de l'invention, montée sur la baie d'une porte d'automobile ; et
— la figure 3 montre, en coupe transversale, une coulisse suivant un second mode de mise en oeuvre de l'invention, montée sur la baie d'une porte d'automobile.

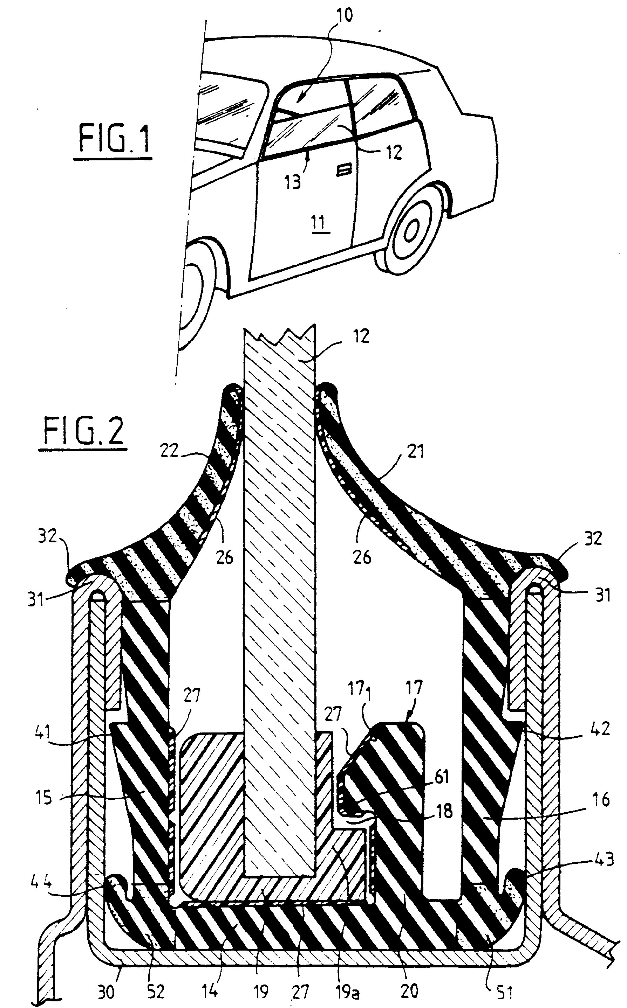

Sur la porte d'automobile 11, montrée partiellement figure 1, la glace 12 est représentée en position semi-baissée. L'étanchéité inférieure de cette glace à la pluie, au sable, à la poussière et plus généralement vis-à-vis de l'introduction de tout élément ou particule solide, liquide ou gazeuse ainsi qu'aux ondes sonores est assurée par au moins un lécheur 13, tandis que l'étanchéité supérieure et latérale de cette glace est assurée, simultanément à son guidage, par des coulisses entourant une baie 10 et fixées dans un châssis généralement métallique, le plus souvent profilé en U, solidaire de la porte du véhicule sauf dans le cas de cabriolets où l'une au moins des coulisses est solidaire d'un montant fixe.

Comme montré sur la figure 2, une coulisse selon l'invention est constituée d'une base 14, de deux flancs 15 et 16, sensiblement perpendiculaires à la base 14 lorsque la coulisse est montée dans le châssis 30 et de deux lèvres d'étanchéité 21, 22, reliées respectivement aux extrémités des flancs 15 et 16 distantes de la base. La coulisse comporte aussi des moyens de fixation au châssis 30, comme des butées 41, 42 et des saillies ou protubérances 43, 44, les lèvres 21, 22 ainsi que les moyens 41-44 de fixation au châssis 30 étant réalisés dans un matériau élastique, notamment un élastomère ou un plastomère comme du caoutchouc ou du PVC. Dans l'exemple décrit et représenté, le châssis 30 comporte un profil d'accrochage 31 avec les bords duquel coopèrent les butées 41, 42 et la coulisse présente, à l'extrémité de ses lèvres opposée à celle au contact de la vitre 12, une patte profilée 32 dont la courbure épouse la courbe du profil 31. La patte 32 est de préférence constituée en un matériau plus souple que la base 14 et les flancs 15 et 16 qui sont, eux, réalisés de préférence en un ou plusieurs matériaux élastiques relativement durs alors que les protubérances 43 et 44 sont avantageusement réalisées en un matériau relativement souple, comme les parties de liaison 51, 52 de la base 14 aux flancs 15 et 16.

Pour le guidage de la glace un des angles de celle-ci est muni par tout moyen connu, -par exemple collage, vissage, coopération de tétons avec un perçage de la vitre-, d'un patin de guidage 19, profilé ici suivant une section droite en $\ulcorner$ et la coulisse comporte une nervure 17 ménagée à l'extrémité d'un montant 20 érigé sur la base 14 et en le même matériau que celle-ci. Le montant 20, sensiblement parallèle aux flancs 15 et 16 dans la condition de montage de la coulisse, forme avec la nervure 17 un profil à section droite sensiblement en forme de $\ulcorner$, le bec ou épaulement 61 de la nervure 17 limitant avec la base 14 une gorge 18 de réception de la tête 19a en saillie du patin 19.

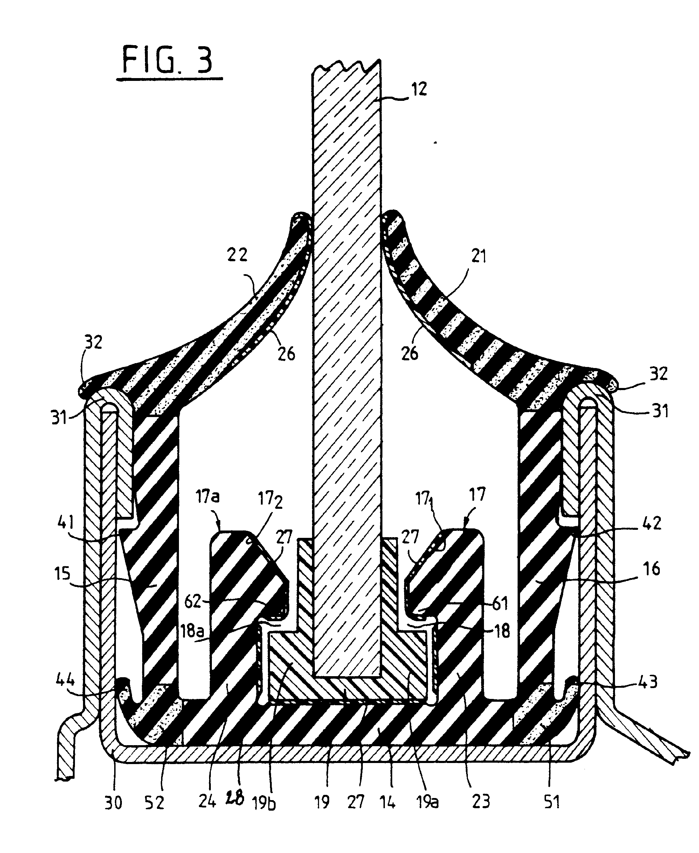

Dans la variante illustrée sur la figure 3, deux montants 23 et 24 en le même matériau que la base 14 sont érigés sur la base de la coulisse, lesdits montants étant sensiblement parallèles entre eux et aux flancs 15 et 16 dans la condition de montage. Comme dans la réalisation selon la figure 2, les montants 23, 24 portent à leur extrémité libre une nervure 17, 17a, respectivement à section droite en forme de trapèze rectangle et ainsi à plans coupés $17_1$ et $17_2$ se faisant face, à symétrie de miroir par rapport au plan moyen de la vitre 12.

Comme dans la réalisation précédente également, les nervures 17 et 17a limitent avec la base 14 et par leurs becs 61 et 62, respectivement, des gorges 18 et 18a de réception des saillies 19a et 19b du patin 19.

Les lèvres d'étanchéité 21, 22, les faces inclinées en pans coupés $17_1$ et $17_2$, les nervures 17 et 17a et celles limitant la ou les gorge(s) de coulissement du patin 19, ainsi que dans le cas de la réalisation selon la figure 2, la surface du flanc 15 sur laquelle glisse le patin, sont revêtues d'un matériau améliorant le glissement, représenté en 26, 27, 28, par exemple un flocage de poils ou fibres ou, en variante, une polyoléfine ou du polytétrafluoroéthylène formant une couche avantageusement interrompue aux raccords avec la base.

Des discontinuités du revêtement glissant, sensiblement au milieu de la base et, dans le cas de la figure 2, sensiblement au milieu de la partie du flanc 15 revêtue par une couche 27 sont également favorables.

La coulisse est de préférence réalisée par coextrusion des divers matériaux la constituant et, dans un tel cas, elle est réalisée par extrusion (ou coextrusion) sous une forme déployée, puis mise en forme par repliage des flancs 15 et 16, repliage facilité par la moins grande dureté des parties 51, 52 qui servent de charnières, ainsi que par les discontinuités du revêtement 27.

Dans le cas de coulisses dont la base 14 et les flancs 15 et 16 sont réalisés en matériaux trop peu élastiques pour permettre l'encliquetage de la glace dans la coulisse, cette dernière est enfilée à chevauchement sur la glace munie de son patin et l'ensemble est ensuite monté sur le véhicule.

## Revendications

1. Coulisse de guidage de glace mobile, notamment de glace ou vitre d'automobile, assurant l'étanchéité et le guidage d'une glace ou vitre munie d'un patin (19) comportant au moins une partie en saillie (19a, 19b) proéminente perpendiculairement au plan moyen de la vitre, destinée à être montée dans un châssis (30) sensiblement en forme de U, ladite coulisse comportant une base (14) et deux flancs (15, 16) sensiblement parallèles entre eux et perpendiculaires à ladite base (14) dans la condition de montage ainsi que deux lèvres d'étanchéité (21, 22) raccordées respectivement aux deux extrémités desdits flancs (15, 16) opposées à ladite base (14), caractérisée en ce qu'elle comporte au moins une nervure (17, 17a) ménagée à l'extrémité d'un montant (20, 23, 24) érigé sur la base (14), ce montant (20, 23, 24) étant sensiblement parallèle aux flancs (15, 16) dans la condition de montage de la coulisse, cette nervure (17, 17a) présentant un épaulement (61, 62) dirigé vers l'intérieur et vers la base (14) de la coulisse de manière à ménager avec ladite base (14) une gorge (18, 18a) pour le guidage du patin (19).

2. Coulisse suivant la Revendication 1, caractérisée en ce que ladite nervure (17, 17a) présente une face à pan coupé ($17_1$ et $17_2$) facilitant la mise en place de la glace dans la coulisse.

3. Coulisse suivant la Revendication 1 ou la Revendication 2, caractérisée en ce que la base (14), les flancs (15, 16) et la ou les nervure(s) (17, 17a) de guidage du patin (19) sont constitués de matériaux identiques ou différents de dureté(s) supérieure(s) à celle(s) des lèvres d'étanchéité (21, 22).

4. Coulisse suivant l'une quelconque des Revendications précédentes, caractérisée en ce que les flancs (15, 16) de la coulisse sont raccordés à la base (14) par des parties (51, 52) en matériau moins dur que la base et les flancs, lesdites parties étant éventuellement d'une pièce avec des moyens de fixation (43, 44) de la coulisse dans le châssis.

5. Coulisse suivant l'une quelconque des Revendications précédentes, caractérisée en ce que les parties de la coulisse venant en contact avec la glace (12) et le patin (19) sont pourvues d'un revêtement facilitant le glissement.

6. Coulisse suivant l'une quelconque des revendications 1 à 4, caractérisée en ce que le ou les montant(s) (20, 23, 24) portant les nervures (17, 17a) sont raccordés à la base (14) par des congés.

7. Coulisse suivant l'une quelconque des revendications précédentes, destinée à assurer le guidage et l'étanchéité d'une glace munie d'un patin en T, caractérisée en ce qu'elle comporte deux nervures de guidage (17, 17a) de préférence symétriques par rapport au plan moyen de la coulisse, et en ce que le revêtement facilitant le glissement (27) est interrompu aux raccords entre les nervures et lesdits montants et entre lesdits montants et la base (14).

8. Coulisse suivant l'une quelconque des revendications 1 à 6, destinée à assurer le guidage d'une glace munie d'un patin en Γ, caractérisée en ce qu'elle comporte une seule nervure de guidage (17) et en ce que le revêtement facilitant le glissement (27) est placé également sur une partie de la face intérieure du flanc (15) relié à l'extrémité de la base non pourvue de nervure, ce revêtement ainsi que celui de la nervure étant interrompus aux raccordements respectifs de ce flanc et du montant (20) et de la nervure avec la base (14).

9. Coulisse suivant la revendication 8, caractérisée en ce que ledit revêtement (27) du flanc (15) est discontinu, interrompu de préférence sensiblement en son milieu.

10. Coulisse suivant l'une quelconque des revendications précédentes, destinée à être montée sur un châssis (30) comportant au moins un profil d'accrochage recourbé (31), caractérisée en ce qu'elle comporte au moins une patte souple (32) profilée de manière à épouser le profil d'accrochage, à laquelle est raccordée l'une des lèvres d'étanchéité (21, 22), ladite patte (32) étant avantageusement réalisée dans le même matériau que les lèvres d'étanchéité (21, 22).

11. Coulisse suivant l'une quelconque des revendications précédentes, caractérisée en ce que le revêtement glissant (27) est réalisé par coextrusion d'une polyoléfine ou de polytétrafluoroéthylène avec le ou les matériau(x) de préférence un ou des élastomère(s) ou plastomère(s) constituant les différentes parties de la coulisse sur lesquelles il est placé.

12. Coulisse suivant l'une quelconque des revendications 3 à 11, caractérisée en ce que le ou les matériau(x) constituant la base (14), les flancs (15, 16), les nervures (17, 17a) et les montants (20, 23, 24) portant les nervures a (ont) une dureté de l'ordre de 50 Shore D.

13. Coulisse suivant l'une quelconque des revendications 3 à 11, caractérisée en ce que le ou les matériau(x) constituant les lèvres d'étanchéité (21, 22), les moyens de fixation (43, 44) et les parties de liaison (51, 52) entre la base (14) et les flancs (15, 16) a (ont) une dureté comprise entre 25 et 75 Shore A.

**Patentansprüche**

1. Führungsgleitbahn für ein bewegliches Fenster, insbesondere für ein Autofenster oder -Scheibe, welche die Dichtheit und die Führung eines Fensters oder einer Scheibe gewährleistet, das oder die mit einem Schuh (19) versehen ist, der zumindest einen vorspringenden, zu der Mittelebene der Scheibe senkrecht hervorragenden Teil (19a, 19b) aufweist, welche in einer annähernd u-förmigen Fassung (30) montiert werden soll, wobei die Gleitbahn eine Basis (14) und zwei Flanken (15, 16) die zueinander annähernd parallel und auf die Basis (14) in dem montierten Zustand senkrecht sind, sowie zwei Dichtungslippen (21, 22) aufweist, die jeweils mit zwei der Basis (14) gegenüberliegenden Enden der Flanken (15, 16) zusammengefügt sind, dadurch gekennzeichnet, daß sie zumindest eine Rippe (17, 17a) aufweist, die an dem Ende einer aus einer Basis (14) herausragenden Stütze (20, 23, 24) profiliert ist, wobei die Stütze (20, 23, 24) im montierten Zustand der Gleitbahn annähernd parallel zu den Flanken (15, 16) ist und die Rippe (17, 17a) einen Vorsprung (61, 62) darstellt, der so in das Innere und in Richtung der Basis (14) der Gleitbahn führt, daß er mit der Basis (14) eine Auskehlung (18, 18a) zur Führung des Schuhs (19) ausspart.

2. Gleitbahn nach Anspruch 1, dadurch gekennzeichnet, daß die Rippe (17, 17a) eine Oberfläche in Form einer abgestumpften Ecke (17₁ und 17₂) aufweist, welche das Einsetzen des Fensters in die Gleitebene erleichtert.

3. Gleitbahn nach Anspruch 1 oder 2, dadurch gekennzeichnet, daß die Basis (14), die Flanken (15, 16) und die Führungsrippe(n) (17, 17a) des Schuhs (19) aus identischen oder verschiedenen Materialien mit einer Härte(n) bestehen, die über jener/jenen der Dichtungslippen (21, 22) liegt (liegen).

4. Gleitbahn nach irgendeinem der vorhergehenden Ansprüche, dadurch gekennzeichnet, daß die Flanken (15, 16) der Gleitbahn mit der Basis (14) durch Teile (51, 52) aus einem Material zusammengefügt sind, das weniger hart als die Basis und die Flanken ist, wobei die Teile gegebenenfalls aus einem Stück mit den Befestigungsmitteln (43, 44) der Gleitbahn in der Fassung sind.

5. Gleitbahn nach irgendeinem der vorhergehenden Ansprüche, dadurch gekennzeichnet, daß die Teile der Gleitbahn, die mit dem Fenster (12) und dem Schuh (19) in Berührung kommen, mit einem das Gleiten erleichternden Überzug versehen sind.

6. Gleitbahn nach irgendeinem der Ansprüche 1 bis 4, dadurch gekennzeichnet, daß die die Rippen (17, 17a) tragenden Stütze(n) (20, 23, 24) mit der Basis (14) durch Ausrundungen zusammengefügt sind.

7. Gleitbahn nach irgendeinem der vorhergehenden Ansprüche, welche die Führung und Dichtung eines mit einem T-förmigen Schuh versehenen Fensters gewährleisten soll, dadurch gekennzeichnet, daß sie zwei Führungsrippen (17, 17a) aufweist, die bezüglich der Mittelebene der Gleitbahn vorzugsweise symmetrisch sind und daß der das Gleiten erleichternde Überzug (27) an den Verbindungsstellen zwischen den Rippen und den Stützen und zwischen den Stützen und der Basis (14) unterbrochen ist.

8. Gleitbahn nach irgendeinem der Ansprüche 1 bis 6, welche die Führung eines mit einem ⌐ -förmigen Schuh versehenen Fensters gewährleisten soll, dadurch gekennzeichnet, daß sie eine einzige Führungsrippe (17) aufweist und daß der das Gleiten erleichternde Überzug (27) auf einem Teil der Innenfläche der Flanke (15) gleichermaßen aufgebracht ist, die mit dem äußersten Ende der Basis, das nicht mit einer Rippe versehen ist, verbunden ist, wobei dieser Überzug so wie jener der Rippe an den jeweiligen Verbindungen dieser Flanke und der Stütze (20) und der Rippe mit der Basis (14) unterbrochen ist.

9. Gleitbahn nach Anspruch 8, dadurch gekennzeichnet, daß der Überzug (27) der Flanke (15) diskontinuierlich, vorzusweise annähernd in seiner Mitte unterbrochen ist.

10. Gleitbahn nach irgendeinem der vorhergehenden Ansprüche, die auf eine Fassung (30) montiert werden soll, die zumindest ein umgebogenes Eingreifprofil (31) aufweist, dadurch gekennzeichnet, daß sie zumindest eine biegsame Einklauung (32) aufweist, die derart profiliert ist, daß sie sich dem Eingreifprofil anpaßt, und mit der einen der Dichtungslippen (21, 22) zusammengefügt ist, wobei die Einklauung (32) vorteilhafterweise aus demselben Material wie die Dichtungslippen (21, 22) ausgebildet ist.

11. Gleitbahn nach irgendeinem der vorhergehenden Ansprüche, dadurch gekennzeichnet, daß der glatte Überzug (27) durch Koextrusion eines Polyolefins oder von Polytetrafluorethylen mit dem oder den Material(ien) vorzugsweise eines oder von Elastomers (Elastomeren) oder Plastomers (Plastomeren) ausgebildet wird, aus denen die verschiedenen Teile der Gleitbahn bestehen, auf denen er aufgebracht ist.

12. Gleitbahn nach irgendeinem der Ansprüche 3 bis 11, dadurch gekennzeichnet, daß das oder die Material(ien), aus dem(denen) die Basis (14), die Flanken (15, 16), die Rippen (17, 17a) und die die Rippen tragenden Stützen (20, 23, 24) bestehen, eine Shore-D-Härte der Ordnung 50 besitzt(besitzen).

13. Gleitbahn nach irgendeinem der Ansprüche 3 bis 11, dadurch gekennzeichnet, daß das oder die Material(ien), aus dem(denen) die Dichtungslippen (21, 22), die Befestigungsmittel (43, 44) und die Verbindungsteile (51, 52) zwischen der Basis (14) und den Flanken (15, 16) bestehen, eine Shore-A-Härte zwischen 25 und 75 besitzt(besitzen).

**Claims**

1 Slide for guiding a mobile window, particularly a motor vehicle window or glass, providing sealing and guiding of a window having a shoe (**19**) comprising at least one projecting portion (**19a, 19b**), projecting perpendicular to the median plane of the window, designed to be mounted in a frame (**30**) which is approximately U-shaped, said slide comprising a base (**14**) and two sides (**15, 16**) approximately parallel to each other and perpendicular to said base (**14**) in the assembled condition, as well as two sealing lips(**21, 22**) connected respectively to the two ends of said sides (**15, 16**) opposite to said base (**14**), characterized in that it comprises at least one rib (**17, 17a**) provided at the end of an upright (**20, 23, 24**) erected on the base (**14**), this upright (**20, 23, 24**) being approximately parallel to the sides (**15, 16**) in the assembled condition of the slide, said rib (**17, 17a**) exhibiting a shoulder (**61, 62**) directed towards the interior and towards the base (**14**) of the slide so as to form with said base (**14**) a group (**18, 18a**) for guiding the shoe (**19**).

2 Slide as claimed in Claim 1, characterized in that said rib (**17, 17a**) has a bevelled face (**17$_1$** and **17$_2$**) facilitating the positioning of the window in the slide.

3 Slide as claimed in Claim 1 or Claim 2, characterized in that the base (**14**), the sides (**15, 16**) and the rib(s) (**17, 17a**) for guiding the shoe (**19**) are made of identical or different materials with a greater hardness than that of the sealing lips (**21, 22**).

4 Slide as claimed in any preceding claim, characterized in that the sides (**15, 16**) of the slide are connected to the base (**14**) by the portions (**51, 52**) of a material less hard than the base and the sides, said portions possibly made in a single piece with the means (**43, 44**) for fixing the slide in the frame.

5 Slide as claimed in any preceding claim, characterized in that the portions of the slide coming into contact with the window (**12**) and the shoe (**19**) are provided with a coating that facilitates sliding.

6 Slide as claimed in any one of Claims 1 to 4, characterized in that the upright(s) (**20, 23, 24**) being the ribs (**17, 17a**) are connected to the base (**14**) by fillets.

7 Slide as claimed in any preceding claim, designed for the guiding and sealing of a window provided with a T-shaped shoe, characterized in that it comprises two guide ribs (**17, 17a**) preferably symmetrical about the median plane of the slide, and in that the coating that facilitates sliding (**27**) is interrupted at the connections between the ribs and said uprights and between said uprights and the base (**14**).

8 Slide as claimed in any one of Claims 1 to 6, designed for guiding a window provided with a Γ-shaped shoe, characterized in that it comprises a single guide rib (**17**) and in that the coating that facilitates sliding (**27**) is also placed on a portion of the inner face of the side (**15**) connected to the end of the base not provided with a rib, this coating as well as that of the rib being interrupted at the respective connections of this side and of the upright (**20**) and of the rib with the base (**14**).

9 Slide as claimed in Claim 8, characterized in that said coaring (**27**) of the side (**15**) is discontinuous, preferably interrupted approximately at its mid-point.

10 Slide as claimed in any preceding claim, designed to be mounted on a frame (**30**) comprising at least one curved engagement profile (**31**), characterized in that it comprises at least one flexible lug (**32**) profiled so as to match the engagement profile, to which one of the sealing lips (**21, 22**) is connected, said lug (**32**) being advantageously made of the same material as the sealing lips (**21, 22**).

11 Slide as claimed in any preceding claim, characterized in that the sliding coating (**27**) is made by co-extrusion of a polyolefin or polytetrafluoroethylene with the material(s), preferably one or more elastomers or plastomers, making up the different parts of the slide on which it is placed.

12 Slide as claimed in any one of Claims 3 to 11, characterized in that the material(s) making up the base (**14**), the sides (**15, 16**), the ribs (**17, 17a**) and the uprights (**20, 23, 24**) bearing the ribs have a hardness of about 50 Shore D.

13 Slide as claimed in any one of Claims 3 to 11, characterized in that the material(s) makig up the sealing lips (**21, 22**), the fixing means (**43, 44**) and the connecting portions (**51, 52**) between the base (**14**) and the sides (**15, 16**) has/have a hardness between 25 and 75 Shore A.

EP 0 354 082 B1

FIG.1

FIG.2

# FIG. 3